# EUROPÄISCHE PATENTSCHRIFT

(11) **EP 3 454 349 B1**
(45) Veröffentlichungstag und Bekanntmachung des Hinweises auf die Patenterteilung: **24.11.2021**
(21) Anmeldenummer: 18191731.1
(22) Anmeldetag: 30.08.2018
(51) Int. Cl.: H01F 7/16, H01F 41/02, H01F 7/127

(54) **VERFAHREN ZUR HERSTELLUNG EINES MAGNETANKER-STÖSSEL-VERBUNDES UND MAGNETANKER-STÖSSEL-VERBUND FÜR EINEN LINEARAKTUATOR**
METHOD FOR PRODUCING A MAGNETIC ANCHOR TAPPET BOND AND MAGNETIC ANCHOR TAPPET BOND FOR A LINEAR ACTUATOR,
PROCÉDÉ DE FABRICATION D'UN RACCORDEMENT INDUIT MAGNÉTIQUE-POUSSOIR ET RACCORDEMENT INDUIT MAGNÉTIQUE-POUSSOIR POUR UN ACTIONNEUR LINÉAIRE

(30) Priorität: 07.09.2017 DE 102017120627
(43) Veröffentlichungstag der Anmeldung: 13.03.2019
(73) Patentinhaber: RAPA Automotive GmbH & Co. KG, 95100 Selb (DE)
(72) Erfinder: WERNER, Michael, 95100 Selb (DE); FRANZ, Markus, 95100 Selb (DE)
(74) Vertreter: Klunker IP Patentanwälte PartG mbB

(56) Entgegenhaltungen:
- EP-A1- 0 284 634
- DE-A1- 10 137 640
- DE-A1-102008 030 452
- DE-A1-102013 202 166
- DE-A1-102014 200 647
- US-A- 3 851 285

## Beschreibung

Die vorliegende Erfindung betrifft einerseits ein Verfahren zur Herstellung eines Magnetanker-Stößel-Verbundes für einen Linearaktuator und andererseits einen Magnetanker-Stößel-Verbund für einen Linearaktuator, insbesondere zur Verwendung für einen Motor eines Fahrzeugs.

In Kraftfahrzeugen können zur Verbesserung des Komforts so genannte aktive Motorlager Anwendung finden. Mittels eines aktiven Motorlagers können unerwünschte Schwingungen und eine dadurch verursachte Geräuschübertragung in den Innenraum des Fahrzeugs unterdrückt werden. Unerwünschte Schwingungen können beispielsweise bei Ausfall oder Abschaltung eines oder mehrerer Zylinder in einem Motor auftreten, wodurch der Motor unrund laufen kann. Ein aktives Motorlager weist dazu eine Steuerung für einen oder mehrere Aktuatoren auf, um den Schwingungen des Motors mithilfe der Aktuatoren in der für einen Fachmann geläufigen Weise entgegenzuwirken.

Als Aktuatoren können insbesondere Linearaktuatoren zum Einsatz kommen. Diese weisen typischerweise einen Stator mit einer zur Erzeugung eines elektromagnetischen Feldes elektrisch bestrombaren Spule und einen sich entlang einer Längsachse der Spule beweglichen Magnetanker auf. Für gewöhnlich ist der Magnetanker mit einem Stößel verbunden. Der Magnetanker kann den Stößel ringförmig umgeben. Ein solcher Ringmagnetanker kann insbesondere mehrteilig sein und beispielsweise einen ersten und einen zweiten Permanentmagnetring, zwischen denen ein Zwischenring angebracht ist, und eine erste und eine zweite Polscheibe umfassen.

Das Kraftniveau des Linearaktuators ist bei einem Linearaktuator mit mehrteiligem Ringmagnetanker, neben der Abhängigkeit vom radialen Luftspalt zwischen dem Magnetanker und dem Stator, vom Umfang, auf dem die Kraft generiert wird, also vom Außendurchmesser des Ankers, sowie vom Volumen der Permanentmagnetringe abhängig.

Aus der Druckschrift DE 10 2007 005 434 A1 ist ein doppelt wirkender elektromagnetischer Aktuator, insbesondere für Hydraulik- und Pneumatik-Anwendungen, bekannt, welcher eine Spule und einen in der Spule angeordneten Ringmagnetanker umfasst. Der Anker weist zwei Permanentmagneten, sowie eine zwischen den Permanentmagneten angeordnete Zentralscheibe, und stirnseitig in einer axialen Richtung jeweils eine aus ferromagnetischem Werkstoff hergestellte Polscheibe auf. Die genannten Teile des Ankers sind direkt, ohne ein Zwischenelement, an einer zentralen Ankerstange angebracht. Diese Anordnung und Gestaltung des Ankers ist nur bei kleinen Aktuatoren sinnvoll, da sie bei großen Aktuatoren mit hohem Kraftniveau zu einem unverhältnismäßig hohen Materialeinsatz der genannten Teile des Ankers führt und damit hohe Materialkosten verursacht.

Demgegenüber ist aus der Druckschrift DE 10 2014 200 647 A1 ein elektromagnetischer, dynamischer Aktuator für aktive Aggregatlager, insbesondere für Motorlager, bekannt, der einen Magnetanker umfasst, welcher relativ zu einem Stator entlang einer Längsachse einer Zylinderspule verschiebbar angeordnet ist. Zwischen Magnetanker und Stator besteht ein radialer Luftspalt. Der Magnetanker weist gegenüber einem Außendurchmesser eines sich entlang der Längsachse der Zylinderspule erstreckenden Stößels einen größeren Innendurchmesser auf und ist über ein Zwischenelement mit dem Stößel verbunden.

Ein derartiger Aktuator kann zwar gegenüber dem aus der Druckschrift DE 10 2007 005 434 A1 bekannten Aktuator mit einem größeren Außendurchmesser hergestellt werden und infolge dessen eine höhere Kraft generieren, ist jedoch wegen des Zwischenelements aufwändig und kostenintensiv herzustellen. Denn einerseits müssen die sich gegenüberliegenden radialen Flächen der zu verbindenden Bauteile Magnetkern-Zwischenelement und Zwischenelement-Stößel bearbeitet werden, und andererseits müssen die genannten Bauteile miteinander verbunden werden, wobei üblicherweise Klebeverfahren eingesetzt werden und die Bauteile dabei aufwändig mechanisch fixiert werden müssen. Darüber hinaus unterliegen die genannten Bauteile bei der Fertigung gewissen Toleranzen, so dass eine Toleranzkette entsteht, welche Einfluss auf die Weite des radialen Luftspalts hat, wodurch das Kraftniveau des Aktuators negativ beeinflusst werden kann.

Die Druckschrift US 3 851 285 A offenbart einen Magnetanker-Stößel-Verbund für einen Linearaktuator. Der Verbund weist einen Stator mit einer zur Erzeugung eines elektromagnetischen Feldes elektrisch bestrombaren Spule, einen sich entlang einer Längsachse der Spule beweglichen, mehrteiligen Magnetanker und einen mit dem Magnetanker verbundenen Stößel auf, wobei der Magnetanker den Stößel ringförmig umgibt.

Die Druckschrift DE 101 37 640 A1 offenbart eine elektromagnetisch arbeitende Stelleinrichtung für hin-und-hergehend bewegbare Elemente, insbesondere Tellerventile an Verdrängungs- bzw. Brennkraftmaschinen. Die Stelleinrichtung besteht aus einem axial beweglich geführten Aktuator mit einem magnetisierbaren Anker und mindestens einem mit dem Anker in Wirkverbindung stehenden Elektromagneten, wobei der Aktuator mittels der Erregung des Elektromagneten aus einer Lage in eine andere Lage translatorisch bewegbar und dort mittels des Elektromagneten haltbar ist. Sämtliche in Wirkverbindung stehenden Polflächen des Ankers einerseits und des Elektromagneten andererseits sind koaxial zueinander angeordnete und in ihrem Radius sich um den Betrag des Arbeitsluftspaltes unterscheidende Zylinderflächen, wobei sowohl der Anker als auch der Elektromagnet mindestens eine derartige Polfläche besitzen.

Die Druckschrift DE 10 2013 202 166 A1 offenbart einen Linearaktuator, umfassend einen Stator mit einer elektrisch bestrombaren Spule zur Erzeugung eines elektromagnetischen Feldes sowie ein bezüglich des Stators axial beweglich gelagertes Stellglied mit einem Magnetanker und einem sich in axialer Richtung erstreckenden Stößel. Das Stellglied ist mittels zumindest eines Federelements in dem Stator derart gelagert, dass es bei Bestromung der Spule reibungsfrei axial bewegbar ist. Das Stellglied umfasst ein Trägerelement, welches sich in radialer Richtung zwischen dem Magnetanker und dem Stößel erstreckt, wobei das Trägerelement aus einem nicht-magnetischen Material mit einer geringeren Dichte als der Magnetanker besteht.

Die Druckschrift EP 0 284 634 A1 offenbart ein elektromechanisches Stellglied mit einem Gehäuse, einer darin befindlichen, durch im Abstand voneinander angeordnete erste und zweite Endwände begrenzten Kammer und einer verschiebbar in dem Gehäuse angeordneten, aus dem Gehäuse herausragenden Stange, an der ein in der Kammer angeordneter Anker befestigt ist, der mit der Stange in Axialrichtung derselben zwischen einer ersten Endstellung, bei der eine erste Stirnfläche des Ankers an der ersten Endwand anliegt, und einer zweiten Endstellung, bei der die gegenüberliegende (zweite) Stirnfläche des Ankers an der zweiten Endwand anliegt, verschiebbar ist. Zudem weist das Stellglied eine den Anker umgebende, im Gehäuse befestigten Erregerspule, eine außen um die Erregerspule angeordneten Einrichtung zum Schließen eines von der Erregerspule erzeugbaren magnetischen Kreises und eine Federanordnung auf, die an der Stange und dem Gehäuse abgestützt ist und im Sinne einer den Anker in seine axiale Mittenstellung bringenden Weise auf die Stange einwirkt. Die Federanordnung besteht aus einer einzigen, im wesentlichen flachen Scheibe, die in ihrer Mitte an der Stange fest angebracht und in ihrem Randbereich an dem Gehäuse befestigt ist und die wenigstens einen etwa spiralförmig verlaufenden Schlitz aufweist.

Die Druckschrift DE 10 2008 030 452 A1 offenbart eine Betätigungsvorrichtung, insbesondere zum Betätigen von außenseitig anschließbaren Ventilen, mit einem Gehäuse und einem darin angeordneten Spulenkörper mit Spulenwicklung, der zumindest teilweise ein Polrohr umfaßt, an dessen einem freien Ende sich ein Polkern anschließt, mit einem zumindest im Polrohr innerhalb eines Ankerraumes längsverfahrbar geführten Magnetanker, der mit einem Betätigungsteil für das Betätigen des jeweiligen Ventilteils zusammenwirkt. Das Betätigungsteil ist zumindest teilweise aus einem spritzbaren Material gebildet, das in einem Verbindungsbereich an den Magnetanker angespritzt ist.

Aufgabe der vorliegenden Erfindung ist es daher, einerseits ein Verfahren zur einfachen und kostengünstigen Herstellung eines Magnetanker-Stößel-Verbundes für einen Linearaktuator, insbesondere zur Verwendung für einen Motor eines Fahrzeugs, und andererseits einen entsprechenden Magnetanker-Stößel-Verbund für einen kostengünstigen Linearaktuator bereitzustellen.

Die Aufgabe wird einerseits durch ein Verfahren zur Herstellung eines Magnetanker-Stößel-Verbundes für einen Linearaktuator und andererseits durch einen Magnetanker-Stößel-Verbund für einen Linearaktuator mit den Merkmalen des jeweils unabhängigen Anspruchs gelöst. Weiterbildungen und vorteilhafte Ausgestaltungen sind jeweils in den abhängigen Ansprüchen angegeben.

Ein Aspekt der Erfindung betrifft ein Verfahren zur Herstellung eines Magnetanker-Stößel-Verbundes für einen Linearaktuator. Der Linearaktuator beinhaltet einen Stator mit einer zur Erzeugung eines elektromagnetischen Feldes elektrisch bestrombaren Spule sowie einen sich entlang einer Längsachse der Spule beweglichen ein- oder mehrteiligen Magnetanker. Der Magnetanker ist mit einem Stößel verbunden, wobei der Magnetanker den Stößel ringförmig umgibt. In einem ersten Schritt des Verfahrens werden der Magnetanker und der Stößel in einem Montagenest so angeordnet, dass ein radialer Zwischenraum zwischen dem Magnetanker und dem Stößel verbleibt. Dabei sind ein Innendurchmesser des Montagenests und ein Außendurchmesser des Magnetankers passgenau zueinander ausgeführt. Dies kann eine Presspassung oder eine möglichst kleine Spielpassung, beispielsweise eine H7-g6-Spielpassung oder kleiner, sein. Typischerweise ist der Innendurchmesser des Montagenests um 0,02 mm größere als die oberste Toleranzgrenze des Magnetankers. In einem zweiten Schritt wird der Zwischenraum mit einem Vergussmaterial vergossen, so dass das Vergussmaterial eine Verbindung zwischen dem Magnetanker und dem Stößel herstellt. In einem dritten Schritt wird der Magnetanker-Stößel-Verbund aus dem Montagenest entnommen.

Durch das der Erfindung zugrunde liegende Verfahren wird kostengünstig und einfach ein Magnetanker-Stößel-Verbund für einen Linearaktuator hergestellt, da lediglich die dem Stator zugewandten Flächen des Magnetankers toleranzgenau bearbeitet werden müssen. Ein toleranzgenaues Bearbeiten der dem Stößel zugewandten Flächen des Magnetankers, der dem Magnetanker zugewandten Flächen des Stößels als auch der Verbindungsflächen eines nun nicht mehr erforderlichen Zwischenelements entfällt, so dass insgesamt die Herstellungskosten für den Linearaktuator reduziert werden, bei welchem der nach dem erfindungsgemäßen Verfahren hergestellte Magnetanker-Stößel-Verbund zum Einsatz kommt. Durch das erfindungsgemäße Verfahren entfällt auch eine gegenüber dem Stand der Technik zwischen den genannten Bauteilen bestehende Toleranzkette, so dass als positiver Effekt der radiale Luftspalt zwischen dem Magnetanker und dem Stator eine kleinstmögliche Weite aufweisen kann, was eine Erhöhung des Kraftniveaus des Linearaktuators zur Folge hat.

Der Magnetanker umfasst erfindungsgemäß mindestens einen ersten und einen zweiten Permanentmagnetring, zwischen denen mindestens ein Zwischenring angeordnet ist, und eine erste und eine zweite Polscheibe, welche jeweils ein- oder mehrteilig ausgeführt sein können. Dabei grenzt jeweils die erste und zweite Polscheibe in axialer Richtung außenliegend an einen der beiden Permanentmagnetringe an. Derartige Ringmagnetanker sind besonders energieeffizient.

Gemäß einer besonderen Ausführungsform ist die erste Polscheibe vollflächig ausgestaltet, weist gegenüber der zweiten Polscheibe einen kleineren Innendurchmesser auf und wird direkt am Stößel angeordnet, wobei die erste Polscheibe beispielsweise auf den Stößel geklebt oder vorzugsweise aufgepresst sein kann. Dadurch dient die erste Polscheibe als Boden für das Vergussmaterial beim Vergießen, wodurch das Entnehmen des Magentanker-Stößel-Verbundes aus dem Montagenest erleichtert wird.

Bevorzugt bestehen die Polscheiben und/oder der Zwischenring zumindest aus einem Werkstoff der Gruppe der weichmagnetischen Materialien und sind daher gegenüber den aus einem üblicherweise hartmagnetischen Werkstoff bestehenden Permanentmagnetringen einfacher und günstiger zu fertigen.

Vorzugweise sind die Permanentmagnetringe hinsichtlich des Außendurchmessers gegenüber den Polscheiben und/oder dem Zwischenring kleiner dimensioniert, so dass die gegenüber den Polscheiben und/oder dem Zwischenring aufwändiger und schwieriger zu fertigenden Permanentmagnetringe, welche typischerweise bei der Herstellung größere Maß- und Formtoleranzen aufweisen können, keinen Einfluss auf den radialen Luftspalt des Linearaktuators haben. Die minimale Weite des Luftspalts wird vielmehr durch den Außendurchmesser der mit wenig Aufwand toleranzgenau herstellbaren Polscheiben und/oder dem Zwischenring definiert, so dass kleine Weiten für den Luftspalt realisiert werden können.

Bevorzugt werden am Magnetanker-Stößel-Verbund, insbesondere am Stößel, Tellerfedern angebracht. Der mit den Tellerfedern versehene Magnetanker-Stößel-Verbund kann anschließend in den Stator so eingesetzt werden, dass der Magnetanker-Stößel-Verbund durch die Tellerfedern am Stator beweglich gelagert ist. Tellerfedern weisen im Vergleich zu anderen Federarten, beispielsweise Druckfedern, für eine Verwendung in einem Linearaktuator ein günstiges Verhältnis von Bauraum und Steifigkeit auf. Um bei erforderlichen Steifigkeiten Auslenkungen im Millimeterbereich realisieren zu können, ist jedoch ein bestimmter Mindestaußendurchmesser der Tellerfedern notwendig.

Gemäß eines weiteren Aspekts der Erfindung weist der Stator vorzugsweise einen sich in Richtung des Stößels zumindest teilweise verringernden axialen Querschnittsverlauf auf. Besonders bevorzugt besitzt der genannte Querschnitt des Stators einen konusförmigen Verlauf. Dadurch wird im zentralen Bereich des Linearaktuators Raum für die axiale Auslenkung der Tellerfedern geschaffen, so dass Tellerfedern mit einem im Vergleich zur Baugröße des Linearaktuators relativ großen Außendurchmesser verwendet werden können, die radial über den Magnetanker hinausreichen. So lässt sich einerseits der Steifigkeits- und Hubbereich des Aktors variieren und andererseits können Aktuatoren auch mit großen Steifigkeits- und Hubwerten kompakter gebaut werden. Aufgrund der kompakten Bauweise werden der Materialeinsatz und damit die Materialkosten bei der Herstellung des Stators reduziert, so dass der Linearaktuator, bei welchem der erfindungsgemäße Stator Anwendung findet, günstig herstellbar ist. Dieser Aspekt der Erfindung wird als unabhängig erfinderisch gegenüber dem Hauptaspekt angesehen, also auch für den Fall, dass die Verbindung zwischen Magnetanker und Stößel nicht durch ein Vergussmaterial hergestellt wird, und selbst für den Fall, dass der Magnetanker den Stößel nicht ringförmig umgibt.

Bevorzugt ist in diesem Zusammenhang ein ebenfalls sich in Richtung des Stößels zumindest teilweise verringernder axialer Querschnittsverlauf der vom Stator umgebenden Spule. Besonders bevorzugt besitzt der genannte Querschnitt der Spule wiederum einen konusförmigen Verlauf. Durch eine derartige Gestaltung der Spule kann der Materialeinsatz und Bauraum bei der Herstellung der Spule optimiert werden, wodurch sich sowohl die Herstellungskosten der Spule, als auch die Herstellungskosten des Linearaktuators, bei welchem die erfindungsgemäße Spule zum Einsatz kommt, reduzieren lassen.

Bevorzugte Ausführungsformen der Erfindung sowie weitere vorteilhafte Ausgestaltungen werden anhand der begleitenden Zeichnungen näher erläutert. Es zeigen:
- Fig. 1: einen Linearaktuator mit Magnetanker-Stößel-Verbund in einer Schnittdarstellung;
- Fig. 2: einen Linearaktuator mit einem Magnetanker-Stößel-Verbund in einer bevorzugten Ausführungsform in einer Schnittdarstellung;
- Fig. 3: einen Magnetanker-Stößel-Verbund in einem Montagenest in einer schematischen Schnittdarstellung; und
- Fig. 4: einen Magnetanker-Stößel-Verbund in einer bevorzugten Ausführungsform in einem Montagenest in einer schematischen Schnittdarstellung.

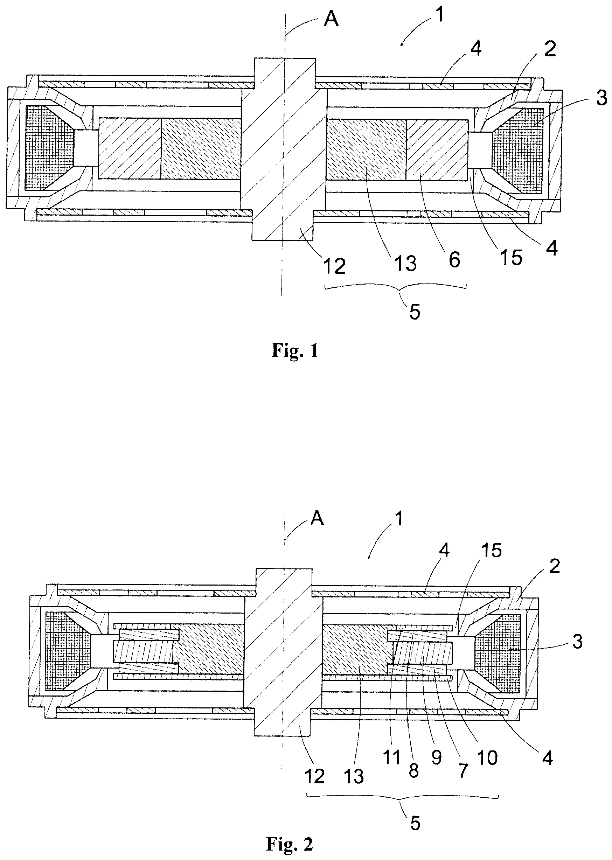

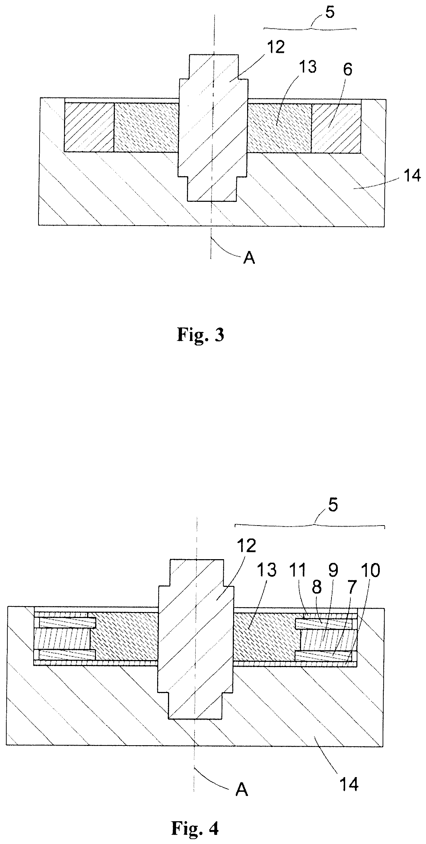

In Fig. 1 und Fig. 3 ist jeweils ein nicht von der beanspruchten Erfindung umfasster, beispielhafter Magnetanker-Stößel-Verbund bzw. ein Linearaktuator dargestellt.

In Fig. 1 ist ein Linearaktuator 1 für ein aktives Motorlager, insbesondere zur Verwendung in einem Motor eines Fahrzeugs, beispielhaft dargestellt. Der Linearaktuator 1 weist einen Stator 2 mit einer zur Erzeugung eines elektromagnetischen Feldes elektrisch bestrombaren Spule 3 auf. Darüber hinaus beinhaltet der Linearaktuator 1 einen sich entlang einer Längsachse A der Spule 3 beweglichen Magnetanker-Stößel-Verbund 5. Der Magnetanker-Stößel-Verbund 5 umfasst einen Stößel 12 und einen den Stößel 12 ringförmig umgebenden Magnetanker 6, sowie ein den Magnetanker 6 mit dem Stößel 12 verbindendes Vergussmaterial 13. Bevorzugt finden als Vergussmaterial 13 Kunststoffe Anwendung, obwohl auch andere Materialien zum Einsatz kommen können. Ein zwischen dem Magnetanker 6 und dem Stator 2 bestehender Luftspalt 15 hat Einfluss auf die Kraftgenerierung des Linearaktuators 1. Zur Erzeugung einer hohen Aktuatorkraft wird eine möglichst geringe Weite des Luftspalts 15 angestrebt. Die Steifigkeit des Linearaktuators 1 wird über zwei Tellerfedern 4 eingestellt. Dazu sind die beiden Tellerfedern 4 ihrerseits an jeweils einer Stufe des Stößels 12 und außenseitig am Stator 2 angebracht. Dadurch ist der Magnetanker-Stößel-Verbund 5 im Stator 2 axial beweglich gelagert.

Der Stator 2 weist einen sich in Richtung des Stößels 12 verringernden axialen Querschnittsverlauf auf. Durch eine derartige Gestaltung des Stators 2 und Anordnung der Tellerfedern 4 am Stator 2 können eine Kollision der Tellerfedern 4 mit dem Stator 2 verhindert und ein Linearaktuator 1 mit kleinem Magnetanker-Stößel-Verbund 5 und großem Hubweg geschaffen werden. Dementsprechend wird bei der Herstellung des Stators 2 des Linearaktuators 1 nur wenig Material benötigt, wodurch geringe Materialkosten anfallen.

Die vom Stator 2 im Wesentlichen umschlossene Spule 3 weist ebenfalls einen sich in Richtung des Stößels 12 zumindest teilweise verringernden Querschnittsverlauf auf. Durch einen ähnlichen Querschnittsverlauf von Spule 3 und Stator 2 kann die Spule 3 im Stator 2 bei optimaler Raumausnutzung integriert werden.

Fig. 2 zeigt den Linearaktuator 1 in einer bevorzugten Ausführungsform. Der Ringmagnetanker 6 des Magnetanker-Stößel-Verbundes 5 des Linearaktuators 1 umfasst in dieser Ausführungsform einen ersten und einen zweiten Permanentmagnetring 7, 8, zwischen denen ein Zwischenring 9 angeordnet ist, sowie eine erste und eine zweite Polscheibe 10, 11. Die beiden Polscheiben 10, 11 grenzen jeweils in axialer Richtung außenliegend an einen der beiden Permanentmagnetringe 7, 8 an, wobei die erste Polscheibe 10 gegenüber der zweiten Polscheibe 11 einen kleineren Innendurchmesser aufweist und beispielsweise auf den Stößel 2 aufgepresst ist.

Das Kraftniveau des in Fig. 2 dargestellten Linearaktuators 1 ist neben der grundsätzlichen Abhängigkeit von der Luftspaltweite und -länge zwischen den genannten Teilen 9, 10, 11 des Magnetankers 6 und dem Stator 2 auch vom Umfang, auf dem die Kraft generiert wird, also insbesondere einem jeweiligen Außendurchmesser der beiden Polscheiben 10, 11 und dem Zwischenring 9, sowie vom Volumen der beiden Permanentmagnetringe 7, 8 abhängig.

Um den Materialeinsatz und demzufolge die Materialkosten zu reduzieren werden die Permanentmagnetringe 7, 8 in der für einen Fachmann geläufigen Weise im Hinblick auf den BHₘₐₓ Punkt des verwendeten spezifischen Materials so dimensioniert, dass sich ein Innendurchmesser, ein Außendurchmesser sowie eine Dicke und damit ein Volumen der Permanentmagnetringe 7, 8 ergibt. Sowohl die beiden Polscheiben 10, 11 als auch der Zwischenring 9 sind zumindest aus einem Werkstoff aus der Gruppe der weichmagnetischen Materialien, insbesondere aus Stahl, ausgeführt, wohingegen die beiden Permanentmagnetringe 7, 8 aus einem Werkstoff aus der Gruppe der hartmagnetischen Materialien ausgeführt sind. Da Bauteile aus weichmagnetischen Materialien gegenüber Bauteilen aus hartmagnetischen Materialien im Allgemeinen einfacher und genauer zu fertigen sind, weisen die Polscheiben 10, 11 und der Zwischenring 9 in dem dargestellten Ausführungsbeispiel einen gegenüber den Permanentmagnetringen 7, 8 größeren Außendurchmesser auf, so dass der zwischen den Polscheiben 10, 11 sowie dem Zwischenring 9 und dem Stator 2 bestehende Luftspalt 15 eine besonders geringe Weite aufweisen kann.

In Fig. 3 ist der in einem Montagenest 14 herstellbare Magnetanker-Stößel-Verbund 5 dargestellt. Zur Herstellung des Magnetanker-Stößel-Verbundes 5 werden der Magnetanker 6 und der Stößel 12 so in dem mit einem Trennmittel beschichteten Montagenest 14 angeordnet, dass zwischen dem Magnetanker 6 und dem Stößel 12 ein radialer Zwischenraum verbleibt. Ein Innendurchmesser des Montagenests 14 und ein Außendurchmesser des Magnetankers 6 sind passgenau zueinander ausgeführt. Der Stößel 12 ist gegenüber dem Außendurchmesser des Magnetankers 6 mittig im Montagenest 14 angeordnet. Der Zwischenraum zwischen dem Magnetanker 6 und dem Stößel 12 ist mit dem Vergussmaterial 13 vergossen, so dass das Vergussmaterial 13 eine Verbindung zwischen dem Magnetanker 6 und dem Stößel 12 herstellt. Durch das Vergießen des Zwischenraums mit dem Vergussmaterial 13 entfällt ein aufwändiges und kostenintensives Bearbeiten der dem Stößel 12 zugewandten Flächen des Magnetankers 6 sowie der dem Magnetanker 6 zugewandten Flächen des Stößels 12.

In Fig. 4 ist der in Fig. 2 gezeigte, bevorzugt ausgeführte Magnetanker-Stößel-Verbund 5 in einem geeigneten Montagenest 14 dargestellt. Zur Herstellung des genannten Magnetanker-Stößel-Verbundes 5 wird die gegenüber der zweiten Polscheibe 11 einen kleineren Innendurchmesser aufweisende erste Polscheibe 10 auf den Stößel 12 aufgepresst. Dadurch dient die vom Innendurchmesser bis zum Außendurchmesser vollflächig ausgestaltete erste Polscheibe 10 als Boden für das Vergussmaterial 13. Alternativ kann die erste Polscheibe 10 wie die zweite Polscheibe 11 einen großen Innendurchmesser besitzen und der Zwischenraum bis zum Boden des Montagenestes 14 ausgegossen werden. Die Außendurchmesser der beiden Polscheiben 10, 11 und des Zwischenrings 9 sind jeweils gegenüber einem zugehörigen Innendurchmesser des Montagenests 14 passgenau ausgeführt und gegenüber der Längsachse A zentriert ausgerichtet, so dass letztlich der in Fig. 2 dargestellte Luftspalt 15, zur Erzeugung einer möglichst hohen Aktuatorkraft, eine sehr geringe Weite aufweist. Der Außendurchmesser der Permanentmagnetringe 7, 8 ist demgegenüber geringfügig kleiner gewählt, vorzugsweise gerade so, dass sie toleranzunkritisch einen noch möglichst großen Außendurchmesser und dementsprechend ein möglichst großes Volumen besitzen. Die zweite Polscheibe 11, der Zwischenring 9 sowie die beiden Permanentmagnetringe 7, 8 und der Stößel 12 sind derart im Montagenest angeordnet, dass zwischen den genannten Teilen 7, 8, 9, 11 und dem Stößel 12 ein radialer Zwischenraum besteht, wobei der Stößel 12 möglichst mittig im Montagenest 14 angeordnet wird. Der Zwischenraum zwischen den Teilen 7, 8, 9, 11 und dem Stößel 12 wird mit dem Vergussmaterial 13 derart vergossen, dass die zweite Polscheibe 11, der Zwischenring 9 sowie die beiden Permanentmagnetringe 7, 8 mit dem Stößel 12 verbunden werden. Dadurch entfällt ein aufwändiges und kostenintensives Bearbeiten der dem Stößel 12 zugewandten inneren Flächen der Teile 7, 8, 9, 11, sowie der gegenüber dem weichmagnetischen Zwischenring 9 und der weichmagnetischen zweiten Polscheibe 11 aufwändiger und schwieriger zu bearbeitenden äußeren Flächen der hartmagnetischen Permanentmagnetringe 7, 8.

## Patentansprüche

1. Verfahren zur Herstellung eines Magnetanker-Stößel-Verbundes (5) für einen Linearaktuator (1), der einen Stator (2) mit einer zur Erzeugung eines elektromagnetischen Feldes elektrisch bestrombaren Spule (3), einen sich entlang einer Längsachse (A) der Spule (3) beweglichen ein- oder mehrteiligen Magnetanker (6) und einen mit dem Magnetanker (6) verbundenen Stößel (12) aufweist, wobei der Magnetanker (6) den Stößel (12) ringförmig umgibt, **gekennzeichnet durch** die Schritte:
Anordnen des Magnetankers (6) und des Stößels (12) in einem Montagenest (14), so dass ein radialer Zwischenraum zwischen dem Magnetanker (6) und dem Stößel (12) verbleibt, wobei zumindest ein Innendurchmesser des Montagenests (14) und zumindest ein Außendurchmesser des Magnetankers (6) passgenau zueinander ausgeführt sind;
Vergießen des Zwischenraums mit einem Vergussmaterial (13), so dass das Vergussmaterial (13) eine Verbindung zwischen dem Magnetanker (6) und dem Stößel (12) herstellt; und
Entnehmen des Magnetanker-Stößel-Verbundes (5) aus dem Montagenest (14); wobei der Magnetanker (6) mindestens einen ersten und einen zweiten Permanentmagnetring (7, 8), zwischen denen mindestens ein Zwischenring (9) angeordnet ist, und mindestens eine erste und eine zweite Polscheibe (10, 11) umfasst, wobei jeweils eine der ersten und zweiten Polscheiben (10, 11) in axialer Richtung außenliegend an einem der beiden Permanentmagnetringe (7, 8) angrenzt.

2. Verfahren nach Anspruch 1, wobei die erste Polscheibe (10) gegenüber der zweiten Polscheibe (11) einen kleineren Innendurchmesser aufweist und so mit dem Stößel (12) verbunden wird, dass sie beim Schritt des Vergießens als Boden für das Vergussmaterial dient.

3. Verfahren nach einem der Ansprüche 1 oder 2, wobei die Permanentmagnetringe (7, 8) gegenüber den Polscheiben (10, 11) und/oder dem Zwischenring (9) einen kleineren Außendurchmesser aufweisen.

4. Verfahren zur Herstellung eines Linearaktuators (1) unter Verwendung eines Verfahrens zur Herstellung eines Magnetanker-Stößel-Verbundes (5) nach einem der Ansprüchen 1 bis 3 und mit den weiteren Schritten:
Anbringen von Tellerfedern (4) an dem Magnetanker-Stößel-Verbund (5); und
Einsetzen des mit den Tellerfedern (4) versehenen Magnetanker-Stößel-Verbundes (5) in einen Stator (2), so dass der Magnetanker-Stößel-Verbund (5) mittels der Tellerfedern (4) beweglich am Stator (2) gelagert ist.

5. Magnetanker-Stößel-Verbund (5) für einen Linearaktuator (1), der einen Stator (2) mit einer elektrisch bestrombaren Spule (3) zur Erzeugung eines elektromagnetischen Feldes sowie einen sich entlang einer Längsachse (A) der Spule (3) beweglichen, ein- oder mehrteiligen Magnetanker (6) und einen mit dem Magnetanker (6) verbundenen Stößel (12) aufweist, wobei der Magnetanker (6) den Stößel (12) ringförmig umgibt, wobei zwischen dem Stößel (12) und dem Magnetanker (6) ein den Magnetanker (6) mit dem Stößel (12) verbindendes Vergussmaterial (13) angeordnet ist, **dadurch gekennzeichnet, dass** der Magnetanker (6) mindestens einen ersten und einen zweiten Permanentmagnetring (7, 8), zwischen denen mindestens ein Zwischenring (9) angeordnet ist, und mindestens eine erste und eine zweite Polscheibe (10, 11) umfasst, wobei jeweils eine der ersten und zweiten Polscheiben (10, 11) in axialer Richtung außenliegend an einen der beiden Permanentmagnetringe (7, 8) angrenzt.

6. Magnetanker-Stößel-Verbund (5) nach Anspruch 5, wobei die erste Polscheibe (10) gegenüber der zweiten Polscheibe (11) einen kleineren Innendurchmesser aufweist, mit dem sie an den Stößel (12) angrenzt.

7. Magnetanker-Stößel-Verbund (5) nach einem der Ansprüche 5 oder 6, wobei die Permanentmagnetringe (7, 8) gegenüber den Polscheiben (10, 11) und/oder dem Zwischenring (9) einen kleineren Außendurchmesser aufweisen.

8. Magnetanker-Stößel-Verbund (5) nach einem der Ansprüche 5 bis 7, wobei die Polscheiben (10, 11) und/oder der Zwischenring (9) zumindest einen Werkstoff der Gruppe der weichmagnetischen Materialien umfassen.

9. Linearaktuator (1) mit einem Magnetanker-Stößel-Verbund (5) nach einem der Ansprüche 5 bis 8.

10. Linearaktuator (1) nach Anspruch 9, wobei der Magnetanker-Stößel-Verbund (5) durch Tellerfedern (4) axial beweglich am Stator (2) gelagert ist.

11. Linearaktuator (1) nach einem der Ansprüche 9 bis 10, wobei der Stator (2) einen sich in Richtung des Stößels (12) zumindest teilweise verringernden axialen Querschnittsverlauf, insbesondere einen konusförmigen Querschnittsverlauf, aufweist.

12. Linearaktuator (1) nach einem der Ansprüche 9 bis 11, wobei die Spule (3) einen sich in Richtung des Stößels (12) zumindest teilweise verringernden axialen Querschnittsverlauf, insbesondere einen konusförmigen Querschnittsverlauf, aufweist.

13. Verwendung des Linearaktuators (1) nach einem der Ansprüche 9 bis 12 in einem Motorlager für einen Motor eines Fahrzeugs.

## Claims

1. A method for manufacturing a solenoid-armature ram composite (5) for a linear actuator (1) having a stator (2) with a coil (3) that can be fed with electrical current for producing an electromagnetic field, a single-part or multi-part solenoid armature (6) movable along a longitudinal axis (A) of the coil (3) and a ram (12) connected with the solenoid armature (6), wherein the solenoid armature (6) surrounds the ram (12) in a ring shape, **characterized by** the steps of:
arranging the solenoid armature (6) and the ram (12) in an assembly mold (14), so that a radial gap remains between the solenoid armature (6) and the ram (12), wherein at least one inner diameter of the assembly mold (14) and at least one outer diameter of the solenoid armature (6) are executed in mutually accurately fitting manner;
casting the gap with a casting material (13), so that the casting material (13) establishes a connection between the solenoid armature (6) and the ram (12); and
removing the solenoid-armature ram composite (5) from the assembly mold (14);
wherein the solenoid armature (6) comprises at least one first and one second permanent magnet ring (7, 8) between which at least one intermediate ring (9) is arranged, and at least one first and one second pole disk (10, 11), wherein respectively one of the first and second pole disks (10, 11) adjoins one of the two permanent magnet rings (7, 8) on the outer side in the axial direction.

2. The method according to claim 1, wherein the first pole disk (10) has a smaller inner diameter than the second pole disk (11) and is connected with the ram (12) such that it serves as the bottom for the casting material in the step of casting.

3. The method according to any of claims 1 or 2, wherein the permanent magnet rings (7, 8) have a smaller outer diameter than the pole disks (10, 11) and/or the intermediate ring (9).

4. A method for manufacturing a linear actuator (1) employing a method for manufacturing a solenoid-armature ram composite (5) according to any of claims 1 to 3, comprising the further steps of:
attaching plate springs (4) to the solenoid-armature ram composite (5); and inserting the solenoid-armature ram composite (5) equipped with the plate springs (4) in a stator (2), so that the solenoid-armature ram composite (5) is movably mounted on the stator (2) by means of the plate springs (4).

5. A solenoid-armature ram composite (5) for a linear actuator (1) having a stator (2) with a coil (3) that can be fed with electrical current for producing an electromagnetic field and a single-part or multi-part solenoid armature (6) movable along a longitudinal axis (A) of the coil (3) and a ram (12) connected with the solenoid armature (6), wherein the solenoid armature (6) surrounds the ram (12) in a ring shape, wherein between the ram (12) and the solenoid armature (6) a casting material (13) is arranged which connects the solenoid armature (6) with the ram (12).
**characterized in that** the solenoid armature (6) comprises at least one first and one second permanent magnet ring (7, 8) between which at least one intermediate ring (9) is arranged, and at least one first and one second pole disk (10, 11), wherein respectively one of the first and second pole disks (10, 11) adjoins one of the two permanent magnet rings (7, 8) on the outer side in the axial direction.

6. The solenoid-armature ram composite (5) according to claim 5, wherein the first pole disk (10) has a smaller inner diameter than the second pole disk (11), with which inner diameter it adjoins the ram (12).

7. The solenoid-armature ram composite (5) according to any of claims 5 or 6, wherein the permanent magnet rings (7, 8) have a smaller outer diameter than the pole disks (10, 11) and/ or the intermediate ring (9).

8. The solenoid-armature ram composite (5) according to any of claims 5 to 7, wherein the pole disks (10, 11) and/or the intermediate ring (9) comprise at least one material of the group of magnetically soft materials.

9. A linear actuator (1) with a solenoid-armature ram composite (5) according to any of claims 5 to 8.

10. The linear actuator (1) according to claim 9, wherein the solenoid-armature ram composite (5) is mounted on the stator (2) in axially movable manner by plate springs (4).

11. The linear actuator (1) according to any of claims 9 to 10, wherein the stator (2) has an axial cross-sectional profile, in particular a cone-shaped cross-sectional profile, which diminishes at least partly in the direction of the ram (12).

12. The linear actuator (1) according to any of claims 9 to 11, wherein the coil (3) has an axial cross-sectional profile, in particular a cone-shaped cross-sectional profile, which diminishes at least partly in the direction of the ram (12).

13. Utilization of the linear actuator (1) according to any of claims 9 to 12 in an engine mount for a vehicle engine.

## Revendications

1. Procédé de fabrication d'un assemblage induit magnétique-poussoir (5) pour un actionneur linéaire (1) qui comporte un stator (2) ayant une bobine (3) apte à être alimentée en courant électrique pour la génération d'un champ électromagnétique, un induit magnétique (6) en une ou plusieurs parties pouvant se déplacer le long d'un axe longitudinal (A) de la bobine (3), et un poussoir (12) joint à l'induit magnétique (6), cependant que l'induit magnétique (6) entoure annulairement le poussoir (12), **caractérisé par** les étapes :
agencement de l'induit magnétique (6) et du poussoir (12) dans un nid de montage (14), de telle façon qu'il reste un espace intermédiaire radial entre l'induit magnétique (6) et le poussoir (12), cependant qu'au moins un diamètre interne du nid de montage (14) et au moins un diamètre externe de l'induit magnétique (6) sont réalisés de manière exactement ajustée l'un à l'autre,
coulage d'un matériau d'enrobage (13) dans l'espace intermédiaire, de telle façon que le matériau d'enrobage (13) crée une jonction entre l'induit magnétique (6) et le poussoir (12) ; et
enlèvement de l'assemblage induit magnétique-poussoir (5) du nid de montage (14) ; cependant que l'induit magnétique (6) comprend au moins un premier et un deuxième anneau magnétique permanent (7, 8) entre lesquels au moins un anneau intermédiaire (9) est agencé, et au moins un premier et un deuxième disque polaire (10, 11), cependant que respectivement un des premier et deuxième disques polaires (10, 11) est adjacent, en direction axiale externe, à un des deux anneaux magnétiques permanents (7, 8).

2. Procédé selon la revendication 1, cependant que le premier disque polaire (10) présente par rapport au deuxième disque polaire (11) un diamètre interne inférieur et est joint de telle manière au poussoir (12) que, lors de l'étape du coulage, il sert de fond pour le matériau d'enrobage.

3. Procédé selon une des revendications 1 ou 2, cependant que les anneaux magnétiques permanents (7, 8) comportent par rapport aux disques polaires (10, 11) et/ou à l'anneau intermédiaire (9) un diamètre externe inférieur.

4. Procédé de fabrication d'un actionneur linéaire (1) en employant un procédé de fabrication d'un assemblage induit magnétique-poussoir (5) selon une des revendications de 1 à 3 et comprenant les étapes suivantes :
placement de rondelles-ressorts (4) à l'assemblage induit magnétique-poussoir (5) ; et
insertion de l'assemblage induit magnétique-poussoir (5) pourvu des rondelles-ressorts (4) dans un stator (2), de telle manière que l'assemblage induit magnétique-poussoir (5) est monté en mobilité au stator (2) au moyen des rondelles-ressorts (4).

5. Assemblage induit magnétique-poussoir (5) destiné à un actionneur linéaire (1) qui comporte un stator (2) ayant une bobine (3) apte à être alimentée en courant électrique pour la génération d'un champ électromagnétique ainsi qu'un induit magnétique (6) en une ou plusieurs parties pouvant se déplacer le long d'un axe longitudinal (A) de la bobine (3), et un poussoir (12) joint à l'induit magnétique (6), cependant que l'induit magnétique (6) entoure annulairement le poussoir (12), cependant que, entre le poussoir (12) et l'induit magnétique (6), un matériau d'enrobage (13) joignant l'induit magnétique (6) au poussoir (12) est agencé, **caractérisé en ce que** l'induit magnétique (6) comprend au moins un premier et un deuxième anneau magnétique permanent (7, 8) entre lesquels au moins un anneau intermédiaire (9) est agencé, et au moins un premier et un deuxième disque polaire (10, 11), cependant que respectivement un des premier et deuxième disques polaires (10, 11) est adjacent, en direction axiale externe, à un des deux anneaux magnétiques permanents (7, 8).

6. Assemblage induit magnétique-poussoir (5) selon la revendication 5, cependant que le premier disque polaire (10) présente par rapport au deuxième disque polaire (11) un diamètre interne inférieur par lequel il est adjacent au poussoir (12).

7. Assemblage induit magnétique-poussoir (5) selon une des revendications 5 ou 6, cependant que les anneaux permanents (7, 8) présentent, par rapport aux disques polaires (10, 11) et/ou à l'anneau intermédiaire (9), un diamètre externe inférieur.

8. Assemblage induit magnétique-poussoir (5) selon une des revendications de 5 à 7, cependant que les disques polaires (10, 11) et/ou l'anneau intermédiaire (9) comprennent au moins une matière du groupe des matériaux magnétiques doux.

9. Actionneur linéaire (1) ayant un assemblage induit magnétique-poussoir (5) selon une des revendications de 5 à 8.

10. Actionneur linéaire (1) selon la revendication 9, cependant que l'assemblage induit magnétique-poussoir (5) est monté en mobilité axiale au stator (2) par des rondelles-ressorts (4).

11. Actionneur linéaire (1) selon une des revendications de 9 à 10, cependant que le stator (2) présente un tracé axial de section transversale se rétrécissant au moins partiellement en direction du poussoir (12), en particulier un tracé de section transversale conique.

12. Actionneur linéaire (1) selon une des revendications de 9 à 11, cependant que la bobine (3) présente un tracé axial de section transversale se rétrécissant au moins partiellement en direction du poussoir (12), en particulier un tracé de section transversale conique.

13. Utilisation d'un actionneur linéaire (1) selon une des revendications de 9 à 12 dans un palier de moteur pour le moteur d'un véhicule.
